(19) Europäisches Patentamt

European Patent Office

Office européen des brevets

(11) **EP 1 056 529 B1**

(12) **FASCICULE DE BREVET EUROPEEN**

(45) Date de publication et mention
de la délivrance du brevet:
**15.01.2003 Bulletin 2003/03**

(21) Numéro de dépôt: **99903743.5**

(22) Date de dépôt: **12.02.1999**

(51) Int Cl.⁷: $B01D\ 46/24$, $B01D\ 29/21$

(86) Numéro de dépôt international:
**PCT/FR99/00317**

(87) Numéro de publication internationale:
**WO 99/042199 (26.08.1999 Gazette 1999/34)**

(54) **CARTOUCHE DE FILTRATION, NOTAMMENT POUR MOTEUR A COMBUSTION INTERNE**

FILTERELEMENT INSBESONDERE FÜR BRENNKRAFTMASCHINE

FILTERING CARTRIDGE, IN PARTICULAR FOR INTERNAL COMBUSTION ENGINE

(84) Etats contractants désignés:
**DE ES FR GB IT NL SE**

(30) Priorité: **17.02.1998 FR 9801901**

(43) Date de publication de la demande:
**06.12.2000 Bulletin 2000/49**

(73) Titulaire: **FILTRAUTO**
**78180 Montigny le Bretonneux (FR)**

(72) Inventeur: **REY, Charles**
**F-72400 La Ferté Bernard (FR)**

(74) Mandataire: **Burbaud, Eric et al**
**Cabinet Plasseraud**
**84, rue d'Amsterdam**
**75440 Paris Cédex 09 (FR)**

(56) Documents cités:
**WO-A-92/05860**          **DE-A- 4 312 076**
**GB-A- 1 148 942**          **GB-A- 1 400 147**
**US-A- 2 801 009**

**Description**

La présente invention est relative aux cartouches de filtration, notamment pour moteurs à combustion interne.

Plus particulièrement, l'invention concerne une cartouche de filtration comprenant un élément filtrant tubulaire qui s'étend selon un axe central entre deux extrémités longitudinales, cet élément filtrant présentant d'une part, une surface cylindrique externe et d'autre part, une surface cylindrique interne délimitant un passage central de fluide, ledit élément filtrant étant constitué par une feuille souple poreuse formant une succession de plis à arêtes axiales, ces plis se présentant, vus en section dans un plan radial, sous la forme d'ailettes incurvées toutes dans un même sens angulaire, chaque ailette étant constituée par deux portions de ladite feuille poreuse, dites respectivement extrados et intrados et comportant chacune une face concave et une face convexe, l'intrados et l'extrados de chaque ailette s'étendant chacun entre une extrémité intérieure voisine de la surface cylindrique interne de la cartouche filtrante et une extrémité extérieure voisine de la surface cylindrique externe de la cartouche filtrante, l'intrados et l'extrados de chaque ailette se rejoignant au niveau de leurs extrémités extérieures, l'intrados de chaque ailette rejoignant l'extrados d'une ailette adjacente au niveau de leurs extrémités intérieures, et la feuille poreuse présentant des éléments de séparation qui maintiennent écartés les uns des autres les différents intrados et extrados et qui rigidifient ladite feuille poreuse.

Le document US-A-2 801 009 décrit un exemple d'une telle cartouche de filtration, qui présente l'inconvénient d'être relativement complexe et délicate à fabriquer industriellement, notamment parce qu'il est difficile de maîtriser de façon fiable et répétitive la forme précise des ailettes incurvées formées par les plis de l'élément filtrant.

Cette difficulté est encore renforcée par le fait que, dans le document susmentionné, les ailettes sont rendues assez rigides par la présence de gaufrages radiaux du papier filtre.

La présente invention a notamment pour but de pallier ces inconvénients.

A cet effet, selon l'invention, une cartouche filtrante du genre en question est essentiellement caractérisé en ce que l'intrados et l'extrados de chaque ailette comportent des lignes de moindre résistance, formant charnières, qui ne sont pas rigidifiées par les éléments de séparation et qui s'étendent parallèlement à l'axe central de l'élément filtrant entre les deux extrémités longitudinales dudit élément filtrant, ces lignes de moindre résistance subdivisant ainsi chaque intrados et chaque extrados en au moins trois panneaux, et les panneaux adjacents reliés entre eux par une de ces lignes de moindre résistance formant entre eux, vus en section dans un plan radial, un angle compris entre 110 et 175 degrés.

Grâce à ces lignes axiales formant charnières, on maîtrise mieux la forme incurvée des ailettes constituées par les plis de l'élément filtrant, de sorte que le processus de fabrication du filtre selon l'invention est rendu plus aisé et plus fiable.

Dans des modes de réalisation préférés de l'invention, on peut éventuellement avoir recours en outre à l'une et/ou à l'autre des dispositions suivantes :

-   la feuille poreuse de l'élément filtrant présente des gaufrages qui s'étendent selon des lignes perpendiculaires à l'axe longitudinal dudit élément filtrant et qui séparent les uns des autres les intrados et extrados des différentes ailettes, ces gaufrages étant cassés sensiblement sans détérioration de la feuille poreuse le long desdites lignes de moindre résistance, de façon que ces lignes soient droites ;
-   les gaufrages sont cassés sensiblement sans écrasement de l'épaisseur de la feuille poreuse le long lesdites lignes de moindre résistance ;
-   les gaufrages sont cassés par des lignes de compression faiblement marquées dans la feuille poreuse de l'élément filtrant, ces lignes de compression étant réalisées sur la face concave de chaque extrados et de chaque intrados des ailettes ;
-   la feuille poreuse de l'élément filtrant présente des bossages emboutis qui séparent les uns des autres les intrados et extrados des différentes ailettes, ladite feuille poreuse présentant des bandes axiales lisses dépourvues de bossage, et ces bandes axiales constituant lesdites lignes de moindre résistance ;
-   la feuille poreuse de l'élément filtrant présente des éléments de séparation rapportés qui maintiennent écartés les uns des autres les intrados et extrados des différentes ailettes, ladite feuille poreuse présentant des bandes axiales lisses dépourvues d'élément de séparation, et ces bandes axiales constituant lesdites lignes de moindre résistance ;
-   les éléments de séparation rapportés sont des cordons de colle ;
-   les panneaux délimités par les lignes de moindre résistance sont sensiblement plans ;
-   les panneaux délimités par les lignes de moindre résistance présentent une largeur constante ou croissante d'un panneau à l'autre, radialement vers l'extérieur ;
-   la feuille poreuse de l'élément filtrant présente des éléments de séparation qui maintiennent écartés les uns des autres les intrados et extrados des différentes ailettes, chaque intrados d'une ailette étant en contact, par l'intermédiaire desdits éléments de séparation, à la fois avec l'extrados de la même ailette et avec l'extrados d'une ailette adjacente, chaque intrados et extrados adjacents délimitant ainsi entre eux un espace libre qui ménage entre lesdits extrados et intrados adjacents un écartement sensiblement constant depuis l'extrémité intérieure et jusqu'à l'extrémité extérieure de ces intrados et extrados adjacents, tous les intrados et extrados de l'élément filtrant présentent une section sensiblement identique dans un plan radial, et les extrémités extérieures des intrados et extrados d'une même ailette étant reliées entre elles par une face d'extrémité qui s'étend sensiblement parallèlement à la surface cylindrique externe de l'élément filtrant ;

- chaque intrados est séparé d'un extrados adjacent :

    . par une première distance curviligne 1 en suivant la surface cylindrique interne de l'élément filtrant dans un plan radial, laquelle surface cylindrique interne présente un premier diamètre d,

    . et par une deuxième distance curviligne L en suivant la surface cylindrique externe dans le même plan radial, laquelle surface cylindrique externe présente un deuxième diamètre D,

    le rapport 1/L entre les première et deuxième distances étant sensiblement égal au rapport d/D entre les premier et deuxième diamètres ;

- la face d'extrémité de chaque ailette de l'élément filtrant présente une section sensiblement rectiligne dans un plan radial, cette face d'extrémité étant reliée à l'intrados et à l'extrados de l'ailette par deux arêtes axiales formées par pliure.

D'autres caractéristiques et avantages de l'invention apparaîtront au cours de la description suivante de plusieurs de ses formes de réalisation, données à titre d'exemples non limitatifs, en regard des dessins joints.

Sur les dessins :

- la figure 1 est une vue de côté d'une cartouche filtrante selon une forme de réalisation de l'invention,
- la figure 2 est une vue de dessus écorchée de la cartouche filtrante de la figure 1,
- la figure 3 est une vue en coupe partielle selon la ligne III-III de la figure 2,
- la figure 4 est une vue partielle en perspective de l'élément filtrant de la cartouche représentée sur les figures 1 à 3,
- et les figures 5 et 6 sont des vues similaires à la figure 4, pour deux autres formes de réalisation de l'invention.

Sur les différentes figures, les mêmes références désignent des éléments identiques ou similaires.

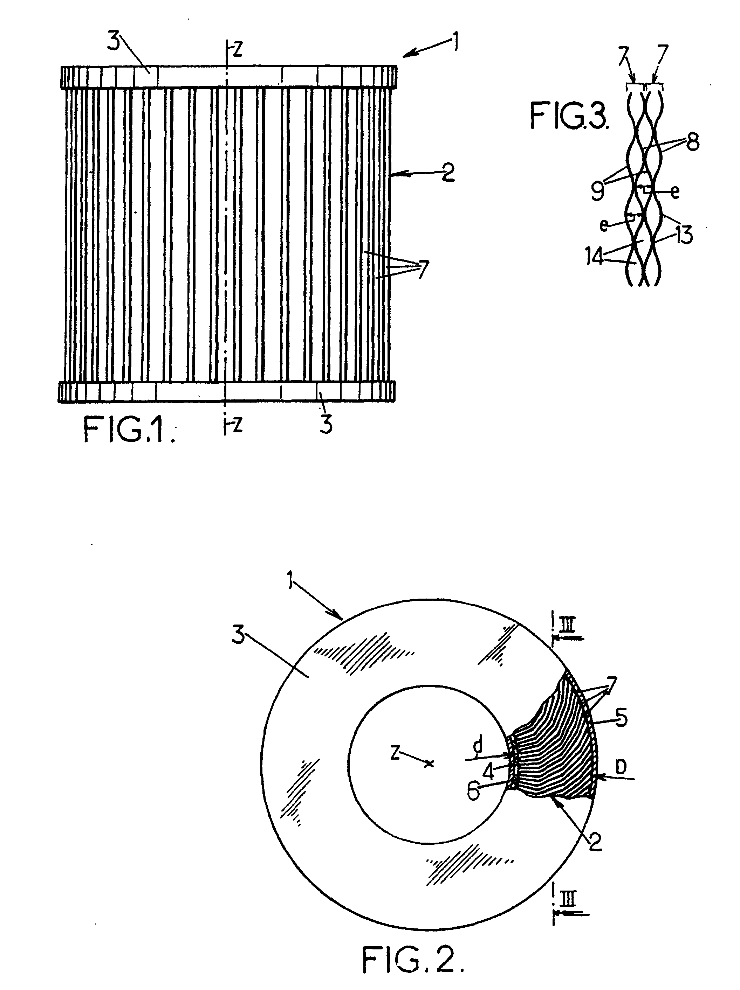

Les figures 1 et 2 représentent une cartouche filtrante 1 qui peut être destinée par exemple à filtrer l'huile de lubrification d'un moteur à combustion interne, ou encore le carburant liquide ou l'air alimentant un tel moteur.

Cette cartouche filtrante comprend :

- un élément filtrant 2 tubulaire, qui présente une forme de révolution autour d'un axe central Z et qui s'étend axialement entre deux extrémités longitudinales, cet élément filtrant étant constitué par une feuille souple poreuse et plissée, réalisée par exemple en papier,
- deux flasques d'extrémité 3, réalisés par exemple sous la forme de couronnes métalliques annulaires, qui coiffent respectivement les deux extrémités longitudinales de l'élément filtrant en étant reliées de façon étanche à ces extrémités notamment par collage, chaque flasque 3 s'étendant radialement entre un rebord intérieur 4 (voir figure 2) et un rebord extérieur 5, les rebords extérieurs 5 des deux flasques emprisonnant ainsi l'élément filtrant 2 en définissant sa surface cylindrique externe,
- et le cas échéant un tube intérieur perforé 6 rigide (voir figure 2) qui est centré sur l'axe Z et aux extrémités duquel sont emboîtées les rebords intérieurs 4 des flasques, ce tube perforé formant un passage central pour le fluide filtré et définissant la surface intérieure interne de l'élément filtrant 2.

Le tube perforé 6 pourrait éventuellement être omis, auquel cas on pourrait disposer provisoirement l'élément filtrant 2 autour d'un tube ou similaire lors de la fabrication de la cartouche filtrante, puis enlever ce tube.

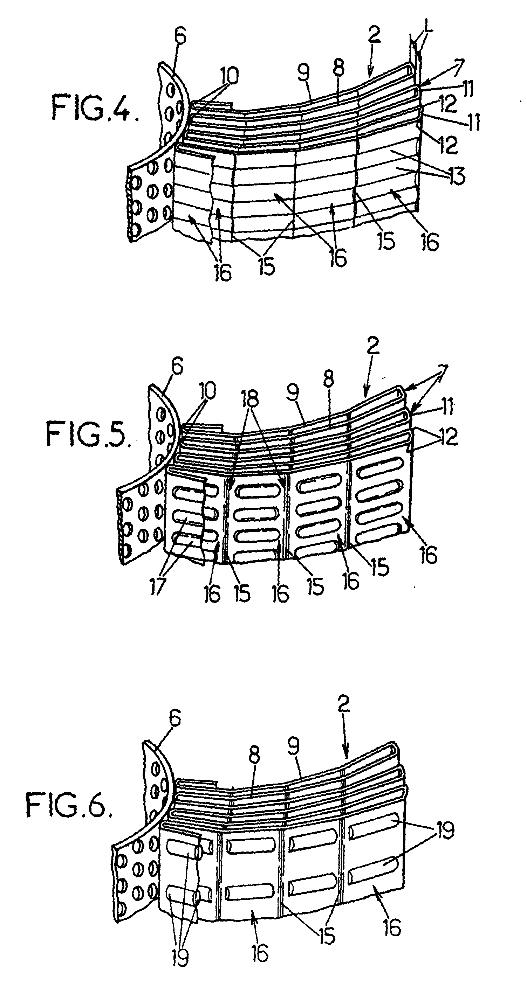

Comme représenté sur les figures 2 et 4, le papier filtre 2 forme une succession angulaire de plis 7 à arêtes axiales qui présentent, vus en section dans un plan radial, la forme d'ailettes incurvées toutes dans un même sens angulaire.

Chacun de ces plis 7 en forme d'ailettes incurvées comprend deux portions de la feuille de papier filtre, dites respectivement extrados 8 et intrados 9 et comportant chacune une face concave et une face convexe.

Ces intrados et extrados sont tous identiques au sein d'une même ailette 7 et d'une ailette à l'autre (même forme et même longueur en section dans le plan radial).

Les intrados et extrados de deux ailettes 7 adjacentes se rejoignent au niveau de leurs extrémités intérieures par une simple pliure 10 située au contact du tube perforé 6.

De plus, les extrémités radialement extérieures des extrados 8 et intrados 9 de chaque ailette 7 sont reliées entre elles par une face d'extrémité 11 qui s'étend sensiblement parallèlement à la surface cylindrique externe de l'élément filtrant.

Dans l'exemple représenté sur les figures 2 et 4, la face d'extrémité 11 de chaque ailette est reliée à l'extrados 8 et à l'intrados 9 de cette ailette respectivement par deux pliures 12 formant des arêtes axiales, de sorte que ladite face d'extrémité 11 présente une section sensiblement rectiligne dans tout plan radial. Ainsi, les faces d'extrémité 11 des différentes ailettes suivent au plus près le contour de la surface cylindrique externe de l'élément filtrant 2.

Toutefois, il serait possible que les faces d'extrémités 11 des ailettes présentent des formes différentes, et notamment des formes anguleuses ou arrondies (en section radiale), en suivant de préférence sensiblement le contour de la surface cylindrique externe de l'élément filtrant 2.

Par ailleurs, le papier filtre 2 est gaufré de façon à former des ondulations alternées qui se trouvent chacune dans un plan radial, comme représenté sur les figures 3 et 4.

Lors du plissage du papier filtre, ces gaufrages 13 viennent au contact les uns des autres, en délimitant entre eux une multitude de canaux 14, également compris chacun dans un plan radial.

On notera que, du fait de la présence des gaufrages 13 et des canaux 14, les pliures intérieures 10 présentent une forme relativement arrondie.

Selon l'invention, on garantit que l'écartement e entre chaque extrados 9 et chaque intrados 8, au niveau des canaux 14, reste sensiblement constant depuis les extrémités intérieure de ces extrados et intrados jusqu'aux extrémités extérieures desdits extrados et intrados.

On entend par "écartement sensiblement constant" un écartement qui ne va pas en s'accroissant vers l'extérieur de l'élément filtrant, cet écartement étant sensiblement le même au voisinage des extrémités intérieure et extérieure des extrados et intrados.

Autrement dit, les intrados et extrados de chaque ailette 7 sont en contact mutuel par l'intermédiaire de leurs gaufrages 13 et définissent entre eux un espace libre présentant une section de passage sensiblement constante depuis la surface cylindrique interne jusqu'à la surface cylindrique externe de l'élément filtrant, et les ailettes 7 sont elles-mêmes en contact mutuel par l'intermédiaire des gaufrages 13, en laissant entre elles un espace libre ayant une section de passage sensiblement constante depuis la surface cylindrique interne jusqu'à la surface cylindrique externe de l'élément filtrant.

La valeur de l'écartement e entre deux ailettes 7 peut éventuellement être différente de la valeur de l'écartement e entre l'intrados et l'extrados d'une même ailette.

Toutefois, dans les modes de réalisation préférés, l'écartement e est le même entre tous les intrados et extrados. Cet écartement est de préférence inférieur à deux fois l'épaisseur du papier filtre, laquelle épaisseur est généralement inférieur à 1 mm dans les cas les plus courants.

Par exemple, l'écartement e peut être de l'ordre de 0,6 à 0,8 mm, et l'épaisseur du papier filtre peut être de l'ordre de 0,4 à 0,6 mm.

Afin d'obtenir un écartement e sensiblement constant entre les différents extrados et intrados, il est nécessaire :

- que les différents extrados et intrados présentent tous une même longueur curviligne, dans un plan radial, sensiblement égale à $(D^2 + d^2)/4d$, où D et d sont respectivement les diamètres extérieur et intérieur de l'élément filtrant 2,
- et que les ailettes 7 suivent des lignes courbes bien précises, qui impliquent de coucher les différentes ailettes 7 de façon relativement prononcée par rapport à la direction radiale.

Plus précisément, les lignes courbes suivies par les intrados et extrados des ailettes sont telles que, en tout point de ces intrados et extrados situé sur un cercle de diamètre x centré sur l'axe Z, on ait la relation :

$$\sin \alpha = d/x,$$

où :

- $\alpha$ est l'angle entre les tangentes respectives du cercle susmentionné et de l'intrados ou extrados considéré pour le point considéré, cet angle étant mesuré dans un plan radial,
- et d est le diamètre intérieur de l'élément filtrant 2.

Pour obtenir cette forme particulière des ailettes 7, on ménage dans l'intrados et l'extrados de chaque ailette des lignes 15 de moindre résistance (voir figure 4) qui s'étendent chacune parallèlement à l'axe Z entre les deux extrémités longitudinales de la cartouche filtrante.

Ces lignes 15 de moindre résistance sont avantageusement réalisées sous la forme de lignes de compression faiblement marquées dans la feuille poreuse de l'élément filtrant, lesquelles lignes de compression sont réalisées sur les faces concaves des extrados et intrados afin d'initier la courbure des ailettes 7.

Les lignes de compression en question servent uniquement à casser ou neutraliser les gaufrages, de façon que les lignes 15 de moindre résistance soient rectilignes pour leur permettre de jouer leur rôle de charnière.

Mais lesdites lignes de compression ne détériorent quasiment pas le papier filtre et n'induisent sensiblement pas d'écrasement irréversible de ce papier filtre, contrairement aux lignes de pliage 10,12.

Ainsi, avant pliage, l'épaisseur du papier filtre au niveau desdites lignes de moindre résistance peut être comprise par exemple entre 70 et 100 % de l'épaisseur normale dudit papier filtre, de façon à diminuer le moins possible la capacité filtrante du papier au niveau des lignes 15.

Les lignes 15 de moindre résistance sont au moins au nombre de deux, et par exemple au nombre de trois, au niveau de chaque extrados et intrados, en délimitant ainsi dans chaque extrados et intrados au moins trois panneaux 16 axiaux (quatre panneaux dans l'exemple représenté sur les dessins).

Ces panneaux 16 peuvent être sensiblement plan, et ils forment entre eux, au niveau des lignes 15 de moindre résistance, des angles compris par exemple entre 110 et 175°, mesurés dans un plan radial.

La largeur des différents panneaux 16 est constante, ou le cas échéant croissante d'un panneau à l'autre en se déplaçant radialement vers l'extérieur sur chaque intrados et extrados.

Par ailleurs, la largeur des faces d'extrémité 11 des ailettes est choisie de façon que la distance curviligne L entre l'extrados 8 et l'intrados 9 de l'ailette, mesurée en suivant la surface cylindrique externe de l'élément filtrant, soit telle que L/l = D/d, où :

- l est la distance curviligne entre l'extrados 8 et l'intrados 9 de l'ailette, mesurée en suivant la surface cylindrique interne de l'élément filtrant dans le plan radial susmentionné,
- et d et D sont respectivement les diamètres intérieur et extérieur de l'élément filtrant 2.

Les mêmes distances curvilignes l et L se retrouvent entre l'extrados 8 et l'intrados 9 appartenant à deux ailettes 7 différentes, sauf bien entendu si les écartements e susmentionnés sont différents du côté intérieur et du côté extérieur des ailettes (auquel cas on trouvera entre deux ailettes des distances curvilignes l' et L' telles que L'/l' = D/d).

En variante, comme représenté sur la figure 5, les gaufrages 13 du papier filtre pourraient être remplacés par des bossages emboutis 17 faisant saillie alternativement sur une face et sur l'autre du papier filtre, et disposés par exemple selon des lignes perpendiculaires à l'axe Z, de façon à entrer localement en contact mutuel lors du plissage de l'élément filtrant, pour séparer les uns des autres les différents extrados et intrados de l'élément filtrant 2 en délimitant des espaces libres de largeur sensiblement constante, comme dans l'exemple décrit précédemment (les espaces libres ne présentent toutefois plus la forme de canaux).

Les lignes de bossage comportent des interruptions qui laissent dans le papier filtre des bandes axiales 18 lisses dépourvues de bossages, lesquelles bandes axiales constituent les lignes 15 susmentionnées de moindre résistance, et forment des charnières entre les différents panneaux 16, comme décrit précédemment.

Selon une autre variante, représentée sur la figure 6, les bossages 17 pourraient être remplacés par des cordons de colle 19, déposés sur les deux faces du papier filtre.

De préférence, les cordons de colle 19 déposés sur les deux feuilles du papier filtre sont disposés en correspondance mutuelle, de façon à minimiser la surface de papier ainsi neutralisée.

Comme dans le mode de réalisation de la figure 5, les cordons 19 de colle sont interrompus localement de façon à ménager dans le papier filtre des bandes axiales lisses 18 qui sont dépourvues de colle, en définissant ainsi les lignes 15 de moindre résistance susmentionnées qui délimitent entre elles les panneaux 16 des extrados et intrados.

## Revendications

1. Cartouche de filtration comprenant un élément filtrant tubulaire (2) qui s'étend selon un axe central (Z) entre deux extrémités longitudinales, cet élément filtrant présentant d'une part, une surface cylindrique externe et d'autre part, une surface cylindrique interne délimitant un passage central de fluide, ledit élément filtrant étant constitué par une feuille souple poreuse formant une succession de plis (7) à arêtes axiales, ces plis se présentant, vus en section dans un plan radial, sous la forme d'ailettes incurvées toutes dans un même sens angulaire, chaque ailette (7) étant constituée par deux portions de ladite feuille poreuse, dites respectivement extrados (8) et intrados (9) et comportant chacune une face concave et une face convexe, l'intrados et l'extrados de chaque ailette s'étendant chacun entre une extrémité intérieure (10) voisine de la surface cylindrique interne de la cartouche filtrante et une extrémité extérieure (12) voisine de la surface cylindrique externe de la cartouche filtrante, l'intrados (9) et l'extrados (8) de chaque ailette se rejoignant au niveau de leurs extrémités extérieures (12), l'intrados (9) de chaque ailette rejoignant l'extrados (8) d'une ailette adjacente au niveau de leurs extrémités intérieures (10), et la feuille poreuse présentant des éléments de séparation (13, 17, 19) qui maintiennent écartés les uns des autres les différents intrados (9) et extrados (8) et qui rigidifient ladite feuille poreuse,
**caractérisée en ce que** l'intrados (9) et l'extrados (8) de chaque ailette comportent des lignes de moindre résistance (15), formant charnières, qui ne sont pas rigidifiées par les éléments de séparation (13, 17, 19) et qui s'étendent parallèlement à l'axe central (Z) de l'élément filtrant entre les deux extrémités longitudinales dudit élément filtrant, ces lignes de moindre résistance subdivisant ainsi chaque intrados (9) et chaque extrados (8) en au moins trois panneaux (16), et les panneaux adjacents reliés entre eux par une de ces lignes de moindre résistance formant entre eux, vus en section dans un plan radial, un angle compris entre 110 et 175 degrés.

2. Cartouche de filtration selon la revendication 1, dans laquelle la feuille poreuse de l'élément filtrant présente des gaufrages (13) qui s'étendent selon des lignes perpendiculaires à l'axe longitudinal (Z) dudit élément filtrant et qui séparent les uns des autres les intrados (9) et extrados (8) des différentes ailettes, ces gaufrages étant cassés sensiblement sans détérioration de la feuille poreuse le long desdites lignes de moindre résistance (15), de façon que ces lignes soient droites.

3.  Cartouche de filtration selon la revendication 2, dans laquelle les gaufrages (13) sont cassés sensiblement sans écrasement de l'épaisseur de la feuille poreuse le long lesdites lignes de moindre résistance (15).

4.  Cartouche de filtration selon la revendication 2 ou la revendication 3, dans laquelle les gaufrages sont cassés par des lignes de compression (15) faiblement marquées dans la feuille poreuse de l'élément filtrant, ces lignes de compression étant réalisées sur la face concave de chaque extrados (8) et de chaque intrados (9) des ailettes.

5.  Cartouche de filtration selon la revendication 1, dans laquelle la feuille poreuse de l'élément filtrant présente des bossages emboutis (17) qui séparent les uns des autres les intrados (9) et extrados (8) des différentes ailettes, ladite feuille poreuse présentant des bandes axiales lisses (18) dépourvues de bossage, et ces bandes axiales constituant lesdites lignes de moindre résistance (15).

6.  Cartouche de filtration selon la revendication 1, dans laquelle la feuille poreuse de l'élément filtrant présente des éléments de séparation (19) rapportés qui maintiennent écartés les uns des autres les intrados (9) et extrados (8) des différentes ailettes, ladite feuille poreuse présentant des bandes axiales lisses (18) dépourvues d'élément de séparation, et ces bandes axiales constituant lesdites lignes de moindre résistance (15).

7.  Cartouche de filtration selon la revendication 6, dans laquelle les éléments de séparation rapportés sont des cordons de colle (19).

8.  Cartouche de filtration selon l'une quelconque des revendications précédentes, dans laquelle les panneaux (16) délimités par les lignes de moindre résistance sont sensiblement plans.

9.  Cartouche de filtration selon l'une quelconque des revendications précédentes, dans laquelle les panneaux (16) délimités par les lignes (14) de moindre résistance présentent une largeur constante ou croissante d'un panneau à l'autre, radialement vers l'extérieur.

10. Cartouche de filtration selon l'une quelconque des revendications précédentes, dans laquelle chaque intrados d'une ailette est en contact, par l'intermédiaire des éléments de séparation (13, 17, 19), à la fois avec l'extrados de la même ailette et avec l'extrados d'une ailette adjacente, chaque intrados et extrados adjacents délimitant ainsi entre eux un espace libre (14) qui ménage entre lesdits intrados et extrados adjacents un écartement (e) sensiblement constant depuis l'extrémité intérieure jusqu'à l'extrémité extérieure de ces intrados et extrados adjacents, tous les intrados et extrados de l'élément filtrant présentant une section sensiblement identique dans un plan radial, et les extrémités extérieures des intrados et extrados d'une même ailette étant reliées entre elles par une face d'extrémité (11) qui s'étend sensiblement parallèlement à la surface cylindrique externe de l'élément filtrant.

11. Cartouche de filtration selon la revendication 10, dans laquelle chaque intrados (9) est séparé d'un extrados (8) adjacent :

    -   par une première distance curviligne 1 en suivant la surface cylindrique interne de l'élément filtrant dans un plan radial, laquelle surface cylindrique interne présente un premier diamètre d,
    -   et par une deuxième distance curviligne L en suivant la surface cylindrique externe dans le même plan radial, laquelle surface cylindrique externe présente un deuxième diamètre D, le rapport l/L entre les première et deuxième distances étant sensiblement égal au rapport d/D entre les premier et deuxième diamètres.

12. Cartouche de filtration selon l'une quelconque des revendications 10 et 11, dans laquelle la face d'extrémité (11) de chaque ailette de l'élément filtrant présente une section sensiblement rectiligne dans un plan radial, cette face d'extrémité étant reliée à l'intrados (9) et à l'extrados (8) de l'ailette par deux arêtes axiales (12) formées par pliure.

**Patentansprüche**

1.  Filterkartusche, umfassend ein röhrenförmiges Filterelement (2), das sich entlang einer zentralen Achse (Z) zwischen zwei längsseitigen Enden erstreckt, wobei dieses Filterelement einerseits eine äußere zylindrische Fläche und andererseits eine innere zylindrische Fläche aufweist, die einen zentralen Fluiddurchlass begrenzen, und wobei das Filterelement aus einem flexiblen, porösen Blatt besteht, das eine Folge von Falten (7) mit axialen Kanten bildet, wobei sich diese Falten, im Querschnitt in Radialebene gesehen, alle als in gleicher winkliger Richtung angeordnete bogenförmige Rippen darstellen, wobei jede Rippe (7) aus zwei Abschnitten des porösen Blatts gebildet ist, die als Außenwölbung (8) bzw. als Innenwölbung (9) bezeichnet werden und die jede eine konkave und eine konvexe Seite aufweisen, wobei die Innenwölbung und die Außenwölbung jeder Rippe sich jeweils zwischen einem der inneren zylindrischen Fläche der Filterkartusche benachbarten inneren Ende (10) und einem der äußeren zylindrischen Fläche der Filterkartusche benachbarten äußeren Ende (12) erstrecken, sich die Innenwölbung (9) und die Außenwölbung (8) jeder Rippe auf Höhe ihrer äußeren Enden (12) berühren, die Innenwölbung (9) jeder Rippe die Außenwölbung (8) einer benachbarten Rippe auf Höhe ihrer inneren Enden (10) berührt und das poröse Blatt Trennelemente (13, 17, 19) aufweist, die einen Abstand zwischen den verschiedenen Innenwölbungen (9) und Außenwölbungen (8) aufrechterhalten und die das poröse Blatt versteifen,

**dadurch gekennzeichnet, dass** die Innenwölbung (9) und die Außenwölbung (8) jeder Rippe Linien geringeren Widerstands (15) aufweisen, die Scharniere bilden, die nicht durch die Trennelemente (13, 17, 19) versteift sind und die sich parallel zur zentralen Achse (Z) des Filterelements zwischen den beiden längsseitigen Enden des Filterelements erstrecken, wobei diese Linien geringeren Widerstands auf diese Art jede Innenwölbung (9) und jede Außenwölbung (8) in wenigstens drei Felder (16) unterteilen, und die benachbarten Felder, die miteinander durch eine dieser Linien geringeren Widerstands miteinander verbunden sind, miteinander, im Querschnitt in einer Radialebene gesehen, einen Winkel zwischen 110 und 175 Grad bilden.

2.  Filterkartusche nach Anspruch 1, bei der das poröse Blatt des Filterelements Prägungen (13) aufweist, die sich entlang senkrecht zur Längsachse (Z) des Filterelements verlaufender Linien erstrecken, und die die Innenwölbungen (9) und Außenwölbungen (8) der verschiedenen Rippen voneinander trennen, wobei die Prägungen vorsichtig, ohne Beschädigung des porösen Blatts, entlang der Linien geringeren Widerstands (15) derart geknickt sind, dass die Linien gerade sind.

3.  Filterkartusche nach Anspruch 2, bei der die Prägungen (13) im Wesentlichen ohne Zusammendrücken der Stärke des porösen Blatts entlang der Linien geringeren Widerstands (15) geknickt sind.

4.  Filterkartusche nach Anspruch 2 oder 3, bei der die Prägungen durch schwach im porösen Blatt des Filterelements markierte Kompressionslinien (15) geknickt sind, wobei diese Kompressionslinien auf der konkaven Seite jeder Außenwölbung (8) und jeder Innenwölbung (9) der Rippen ausgeführt sind.

5.  Filterkartusche nach Anspruch 1, bei der das poröse Blatt des Filterelements herausgepresste Ausbuchtungen (17) aufweist, die die Innenwölbungen (9) und Außenwölbungen (8) der verschiedenen Rippen voneinander trennen, wobei das poröse Blatt glatte axiale Streifen (18) ohne Ausbuchtungen aufweist und diese axialen Streifen die Linien geringeren Widerstands (15) bilden.

6.  Filterkartusche nach Anspruch 1, bei der das poröse Blatt des Filterelements aufgesetzte Trennelemente (19) umfasst, die die Innenwölbungen (9) und Außenwölbungen (8) der verschiedenen Rippen voneinander entfernt halten, wobei das poröse Blatt glatte axiale Streifen (18) ohne Trennelemente aufweist und diese axialen Streifen die Linien geringeren Widerstands (15) bilden.

7.  Filterkartusche nach Anspruch 6, bei der die aufgesetzten Trennelemente Klebstoffwülste (19) sind.

8.  Filterkartusche nach einem der vorangehenden Ansprüche, bei der die durch die Linien geringeren Widerstands begrenzten Felder (16) im Wesentlichen eben sind.

9.  Filterkartusche nach einem der vorangehenden Ansprüche, bei der die durch die Linien (14) geringeren Widerstands begrenzten Felder (16) eine von einem zum nächsten Feld radial nach außen gleich bleibende oder zunehmende Breite aufweisen.

10. Filterkartusche nach einem der vorangehenden Ansprüche, bei der jede Innenwölbung einer Rippe mittels der Trennelemente (13, 17, 19) gleichzeitig mit der Außenwölbung derselben Rippe und der Außenwölbung einer benachbarten Rippe in Kontakt steht, wodurch zwischen jeder benachbarten Innenwölbung und Außenwölbung ein freier Raum (14) begrenzt ist, der zwischen den benachbarten Innenwölbungen und Außenwölbungen eine im Wesentlichen gleich bleibende Entfernung (e) vom inneren Ende bis zum äußeren Ende der benachbarten Innenwölbungen und Außenwölbungen schafft, wobei alle Innenwölbungen und Außenwölbungen des Filterelements einen in einer Radialebene im Wesentlichen identischen Schnitt aufweisen und die äußeren Enden der Innenwölbungen und Außenwölbungen einer Rippe untereinander durch eine Stirnseite (11), die im Wesentlichen parallel zur äußeren zylindrischen Fläche des Filterelements verläuft, verbunden sind.

11. Filterkartusche nach Anspruch 10, bei der jede Innenwölbung (9) von einer benachbarten Außenwölbung (8) getrennt ist:

    -   durch eine erste krummlinige Distanz I, der inneren zylindrischen Fläche des Filterelements in einer Radialebene folgend, wobei diese innere zylindrische Fläche einen ersten Durchmesser d aufweist,
- durch eine zweite krummlinige Distanz L, der äußeren zylindrischen Fläche des Filterelements in der gleichen Radialebene folgend, wobei diese äußere zylindrische Fläche einen zweiten Durchmesser D aufweist und das Verhältnis l/L zwischen der ersten und zweiten Distanz im Wesentlichen dem Verhältnis d/D zwischen dem ersten und dem zweiten Durchmesser entspricht.

12. Filterkartusche nach einem der Ansprüche 10 und 11, bei der die Stirnseite (11) jeder Rippe des Filterelements einen in einer Radialebene im Wesentlichen geradlinigen Schnitt aufweist, wobei diese Stirnseite mit der Innenwölbung (9) und der Außenwölbung (8) der Rippe durch zwei durch Faltung gebildete axiale Kanten (12) verbunden ist.

## Claims

1. Filter cartridge comprising a tubular filter element (2) extending along a central axis (Z) between two longitudinal ends, this filter element having an external cylindrical surface on the one hand and an internal cylindrical surface delimiting a central passage for fluid on the other, said filter element being made from a porous, flexible sheet forming a succession of pleats (7) with axial ridges, these pleats forming, viewed in section in a radial plane, vanes all curved in a same angular direction, each vane (7) comprising two portions of said porous sheet, referred to respectively as an upper face (8) and a lower face (9), and each having a concave face and a convex face, each lower face and upper face of each vane extending between an inner end (10) close to the internal cylindrical surface of the filter cartridge and an outer end (12) close to the external cylindrical surface of the filter cartridge, the lower face (9) and the upper face (8) of each vane being joined on a level with their outer ends (12), the lower face (9) of each vane being joined to the upper face (8) of an adjacent vane on a level with their inner ends (10), and the porous sheet having separator elements (13, 17, 19) which keep the lower faces (9) and upper faces (8) spaced apart from one another and which stiffen said porous sheet, **characterised in that** the lower face (9) and the upper face (8) of each vane have lines (15) of least resistance forming hinges, which are not stiffened by the separator elements (13, 17, 19) and which extend parallel with the central axis (Z) of the filter element between the two longitudinal ends of said filter element, these lines of least resistance therefore sub-dividing each lower face (9) and each upper face (8) into at least three panels (16), and the adjacent panels joined to one another by one of these lines of least resistance subtend between them an angle ranging between 110 and 175 degrees, as viewed in section in a radial plane.

2. Filter cartridge as claimed in claim 1, in which the porous sheet of the filter element has embossments (13) extending along lines perpendicular to the longitudinal axis (Z) of said filter element and which separate the lower faces (9) and upper faces (8) of the different vanes from one another, these embossments being interrupted without substantially causing any deterioration in the porous sheet along said lines (15) of least resistance, so that these lines are straight.

3. Filter cartridge as claimed in claim 2, in which the embossments (13) are interrupted without causing any crushing in the thickness of the paper along said lines (15) of least resistance.

4. Filter cartridge as claimed in claim 2 or claim 3 in which the embossments are interrupted by compression lines (15) lightly imprinted in said porous sheet of the filter element, these compression lines being formed on the concave face of each upper face (8) and each lower face (9) of the vanes.

5. Filter cartridge as claimed in claim 1, in which the porous sheet of the filter element has stamped bosses (17) which separate the lower faces (9) and the upper faces (8) of the different vanes from one another, said porous sheet having smooth axial strips (18) devoid of bosses and these axial strips constituting said lines (15) of least resistance.

6. Filter cartridge as claimed in claim 1, in which the porous sheet of the filter element has built-up separator elements (19) which keep the lower faces (9) and upper faces (8) of the different vanes spaced apart from one another, said porous sheet having smooth axial strips (18) devoid of separator elements, these axial strips constituting the lines (15) of least resistance.

7. Filter cartridge as claimed in claim 6 in which the built-up separator elements are lines of glue (19).

8. Filter cartridge as claimed in any one of the preceding claims in which the panels (16) delimited by the lines of least resistance are substantially flat.

9. Filter cartridge as claimed in any one of the preceding claims in which the panels (16) delimited by the lines of least resistance (14) have a constant or increasing width from one panel to the next in a radial direction towards the exterior.

**10.** Filter cartridge as claimed in any one of the preceding claims in which each lower face of a vane is in contact, by means of the separator elements (13, 17, 19), both with the upper face of the same vane and with the upper face of an adjacent vane, each adjacent lower face and upper face thereby delimiting a free space between them (14) which provides a substantially constant space (e) between said adjacent lower face and upper face from the inner end out to the outer end of said adjacent lower face and upper face, all the lower faces and upper faces of the filter element having a substantially identical section in a radial plane, and the outer ends of the lower face and upper face of a same vane being joined to one another by an end face (11) extending substantially parallel with the external cylindrical surface of the filter element.

**11.** Filter cartridge as claimed in claim 10 in which each lower face (9) is separated from an adjacent upper face (8) :

- by a first curvilinear distance l along the internal cylindrical surface of the filter element in a radial plane, which internal cylindrical surface has a first diameter d,
- and by a second curvilinear distance L along the external cylindrical surface in the same radial plane, which external cylindrical surface has a second diameter D,

the ratio l/L between the first and second distances being substantially equal to the ratio d/D between the first and second diameters.

**12.** Filter cartridge as claimed in any one of claims 10 and 11 in which the end face (11) of each vane of the filter element has a substantially straight section in a radial plane, this end face being joined to the lower face (9) and the upper face (8) of the vane by two axial ridges (12) formed by a fold.

EP 1 056 529 B1

FIG.1.

FIG.2.

FIG.3.

10

FIG.4.

FIG.5.

FIG.6.